# EUROPÄISCHE PATENTSCHRIFT

(11) **EP 1 099 531 B1**
(45) Veröffentlichungstag und Bekanntmachung des Hinweises auf die Patenterteilung: **02.07.2003**
(21) Anmeldenummer: 99120586.5
(22) Anmeldetag: 16.10.1999
(51) Int. Cl.: B29C 53/68, B29C 53/80, B29D 23/00, B65H 57/16

(54) **Vorrichtung zur Einarbeitung einzelner Verstärkungsfäden in einem Schlauchrohling und Verfahren zur Herstellung eines fadenverstärkten Schlauchrohlings mit Hilfe der Vorrichtung**
Device for incorporating reinforcement threads in a hose and process to manufacture a thread-reinforced hose with help of the device
Dispositif pour incorporer des fils de renforcement dans un tuyau et procédé pour fabriquer un tuyau renforcé par des fils au moyen du dispositif

(43) Veröffentlichungstag der Anmeldung: 16.05.2001
(73) Patentinhaber: ContiTech Luftfedersysteme GmbH, 30165 Hannover (DE)
(72) Erfinder: Röthemeyer, Fritz, Dr., 30916 Isernhagen (DE); Hüls, Achim, 30890 Barsinghausen (DE); Oehl, Rainer, 30165 Hannover (DE); Wode, Stefan, 30851 Langenhagen (DE)
(74) Vertreter: Schneider, Egon

(56) Entgegenhaltungen:
- EP-A- 0 605 767
- AU-A- 1 827 776
- FR-A- 1 113 671
- FR-A- 1 126 040
- FR-A- 2 512 577
- US-A- 2 093 206

## Beschreibung

Die Erfindung betrifft eine Vorrichtung zur Aufbringung einzelner Verstärkungsfäden auf eine schlauchförmige Schicht aus polymerem Werkstoff, die zu einem fadenverstärkten, aus mehreren Schichten bestehenden Schlauchrohling aus polymerem Werkstoff weiterverarbeitet wird. Die Erfindung betrifft ferner ein Verfahren zur Herstellung eines fadenverstärkten aus mehreren Schichten bestehenden Schlauchrohlings aus polymerem Werkstoff mit Hilfe einer solchen Vorrichtung.

Typische Produkte, die aus einem fadenverstärkten polymeren Werkstoff hergestellt werden, sind Schläuche und Luftfedern. Der Luftfederbalg einer Luftfeder z.B. steht unter einem hohen Druck. Er enthält eine Vielzahl von Verstärkungsfäden, die in äquidistanten Abständen dicht nebeneinander liegen, um diesem Druck standhalten zu können (ein handelsüblicher Luftfederbalg enthält beispielsweise ca. 200 bis 300 Verstärkungsfäden pro 10 cm).

Es ist bereits seit langem bekannt, einen Luftfederbalg aus einzelnen ebenen Lagen zu fertigen, in die die Verstärkungsfäden bereits eingebettet sind. Die einzelnen Lagen werden auf einen Dorn gewickelt und in einem Überlappungsbereich bzw. in einem Stoßbereich miteinander verbunden und danach vulkanisiert. Der Luftfederbalg ist dann fertiggestellt.

Das genannte Verfahren hat den Vorteil, daß sich in einer ebenen Lage eine große Anzahl von Verstärkungsfäden, die jeweils einen äquidistanten Abstand zueinander aufweisen, auf einfache Art und Weise einbetten läßt. Es ist jedoch festzustellen, daß der Überlappungsbereich bzw. der Stoßbereich in dem Luftfederbalg die physikalischen Eigenschaften des Luftfderbalges nachteilig beeinflussen kann und darüber hinaus die Stabilität des Luftfederbalges in diesem Bereich verringert.

Es ist deshalb auch schon vorgeschlagen worden, einen Luftfederbalg aus einem endlosen Schlauch zu fertigen, in den die äquidistanten Verstärkungsfäden bereits eingearbeitet sind. Der Vorteil dieses Herstellungsverfahrens ist darin zu sehen, daß der Schlauch, von dem der Luftfederbalg in der gewünschten Länge abgetrennt wird, weder einen Überlappungsbereich noch einen Stoßbereich aufweist. Es ist jedoch schwierig, in einen Schlauch eine Großzahl äquidistanter Verstärkungsfäden einzubetten. Es sind bereits unterschiedliche Vorschläge gemacht worden, wie dies erfolgen kann.

Aus der EP 0 605 767 A1 ist beispielsweise eine Koextrusionsvorrichtung zur Herstellung eines fadenverstärkten Schlauchrohlings aus polymerem Material bekannt. Der Schlauchrohling besteht aus drei Schichten, wobei zwischen der ersten und der dritten Schicht zwei helisch gewickelte Lagen aus äquidistanten Verstärkungsfäden liegen. Die beiden Lagen der Verstärkungsfäden sind durch die zweite Schicht voneinander getrennt. Zur Herstellung eines solchen Schlauchrohlings enthält die Koextrusionsvorrichtung einen ersten Fließkanal mit einem kreisförmigen Querschnitt, der konzentrisch von einem zweiten und dritten Fließkanal mit einem kreisförmigen Querschnitt umfaßt wird. Diese Fließkanäle dienen der Herstellung der einzelnen polymeren Schichten des Schlauchrohlings. Zwischen dem ersten und dem zweiten Fließkanal befindet sich ein Führungselement für die erste Lage der Verstärkungsfäden, das ebenfalls einen kreisförmigen Querschnitt aufweist. Ein weiteres Führungselement für die zweite Lage der Verstärkungsfäden befindet sich zwischen dem zweiten und dem dritten Fließkanal. Die Führungselemente für die Verstärkungsfäden sind zwischen den Fließkanälen drehbar angeordnet, um die Verstärkungsfäden helisch zwischen den einzelnen Schichten des Schlauchrohlings einbetten zu können. Jedes Führungselement weist eine Vielzahl von äquidistanten Führungskanälen auf, wobei in jedem Führungskanal ein einzelner Verstärkungsfaden geführt wird. Die Fließkanäle und die Führungselemente haben die Form eines Kegels und verjüngen sich in Längsrichtung auf den Durchmesser des herzustellenden Schlauchrohlings.

Mit der aus der EP 0 605 767 A1 bekannten Koextrusionsvorrichtung läßt sich in einem Verfahrensschritt ein Schlauchrohling herstellen, der zwei Lagen von helisch gewickelten äquidistanten Verstärkungsfäden aufweist. Es ist jedoch festzustellen, daß eine aufwendige Vorbereitung der Koextrusionsvorrichtung notwendig ist, bevor mit der Fertigung des Schlauchrohlings begonnen werden kann, da die Verstärkungsfäden einzeln durch die Führungskanäle der Führungselemente geführt werden müssen.

Aus der US-PS 4,578,024 ist ebenfalls eine Koextrusionsvorrichtung bekannt, die einen ähnlichen Aufbau aufweist, wie die aus der EP 0 605 767 A1 bekannte Koextrusionsvorrichtung und mit der ebenfalls ein Schlauchrohling mit äquidistanten Verstärkungsfäden in einem Verfahrensschritt hergestellt werden kann. Auch bei dieser Koextrusionsvorrichtung wird jedoch jeder einzelne Verstärkungsfaden in einem ihm zugeordneten Führungskanal geführt, so daß auch hier eine aufwendige Vorbereitung des Koextrusionskopfes notwendig ist, bevor mit der Fertigung des Schlauchrohlings begonnen werden kann.

Der Erfindung liegt die Aufgabe zugrunde, eine Vorrichtung zur Aufbringung einzelner Verstärkungsfäden auf eine schlauchförmige Schicht aus polymerem Werkstoff zu schaffen, mit Hilfe der einerseits ein Schlauchrohling mit äquidistanten Verstärkungsfäden einfach zu fertigen ist und die andererseits einfach für die Fertigung vorbereitet werden kann. Der Erfindung liegt ferner die Aufgabe zugrunde, ein einfaches Verfahren zur Herstellung eines fadenverstärkten Schlauchrohlings aus polymerem Werkstoff zu schaffen, das einfach vorzubereiten und einfach durchzuführen ist.

Gemäß den Merkmalen des Anspruchs 1 wird die Aufgabe dadurch gelöst, daß eine Vorrichtung zur Aufbringung einzelner Verstärkungsfäden auf eine schlauchförmige Schicht folgende Merkmale aufweist:
- die Vorrichtung enthält einen Positionierring, der auf einer Umfangslinie mindestens eine Reihe von äquidistanten Löchern aufweist, durch die die Verstärkungsfäden in einem Eintrittswinkel zur Längsachse des Positionierringes von radial außen nach radial innen führbar sind,
- die Vorrichtung enthält ein rotationssymmetrisches, trichterförmiges Umlenkelement, das einen einzigen sich stetig verjüngenden Kanal mit einer ringförmigen Eintrittsfläche und einer kleineren ringförmigen Austrittsfläche umschließt und auf dessen rotationssymmetrischen radial inneren Oberfläche die Verstärkungsfäden führbar sind,
- an der Eintrittsfläche weist das Umlenkelement einen Eintrittswinkel α zur Längsachse des Umlenkelementes auf, der weitestgehend dem Eintrittswinkel der Verstärkungsfäden zur Längsachse des Positionierringes entspricht,
- an der Austrittsfläche weist das Umlenkelement einen Austrittswinkel zur Längsachse des Umlenkelementes auf, der ca. 0° bis 25°, vorzugsweise 0° bis 10°, beträgt,
- das Umlenkelement wird von dem Positionierring konzentrisch umfaßt und ist axial zum Positionierring derart ausgerichtet, daß radial durch die Löcher des Positionierringes geführte Verstärkungsfäden direkt in die Eintrittsfläche des Umlenkelementes führbar sind.

Gemäß dem Anspruch 4 wird die Aufgabe ferner durch das folgende Verfahren gelöst
- durch jedes Loch des Positionierringes wird ein Verstärkungsfaden in einem Eintrittswinkel zur Längsachse des Positionierringes von radial außen nach radial innen geführt
- die Verstärkungsfäden werden auf die radial innere Oberfläche des Umlenkelementes gelegt und durch das Umlenkelement von dem Eintrittswinkel in einen weitestgehend axialen Verlauf umgelenkt, wobei die Verstärkungsfäden ständig auf Zug belastet werden und ferner dadurch, daß zur Herstellung eines fadenverstärkten Schlauchrohlings die folgenden Verfahrensschritte durchgeführt werden:
   - in einer ersten Verarbeitungsstation wird auf einem rotationssymmetrischen Dorn eine erste Schicht aus polymerem Werkstoff aufgebracht
   - der mit der ersten Schicht beschichtete Dom wird ausgehend von der Eintrittsfläche des Umlenkelementes konzentrisch durch die Austrittsfläche des Umlenkelementes geführt, so daß sich die auf der radial inneren Oberfläche des Umlenkelementes befindlichen Verstärkungsfäden in äquidistanten Abständen auf der radial äußeren Oberfläche der ersten Schicht ablegen
   - der mit der ersten Schicht beschichtete Dorn wird mindestens einer weiteren Verarbeitungsstation zugeführt, in der auf die erste Schicht eine weitere Schicht aus polymerem Werkstoff aufgebracht wird.

Der Grundgedanke der Erfindung ist darin zu sehen, daß die Verstärkungsfäden lediglich durch die Löcher des Positionierringes einzeln geführt werden, wohingegen in dem Umlenkelement keine einzelnen Führungskanäle für die einzelnen Verstärkungsfäden vorgesehen sind. Vielmehr wird jeder Verstärkungsfaden ohne separaten Führungskanal auf der radial inneren Oberfläche des Umlenkelementes geführt. Wird hierbei jeder einzelne Verstärkungsfaden auf Zug belastet, so legen sich die Verstärkungsfäden auf der radial inneren Oberfläche des Umlenkelementes überraschenderweise automatisch so ab, daß sie in der ringförmigen Austrittsfläche des Umlenkelementes alle den gewünschten äquidistanten Abstand zueinander einnehmen (näheres siehe Figurenbeschreibung).

Die mit der Erfindung erzielten Vorteile sind Insbesondere darin zu sehen, daß die einzelnen Verstärkungsfäden auf einfache Art und Weise durch die einzelnen Löchern in den Positionierring geführt werden können, da es sich bei den einzelnen Löchern nicht um langgezogene Führungskanäle handelt. Ein weiterer Vorteil der Erfindung ist darin zu sehen, daß sich die einzelnen Verstärkungsfäden automatisch auf der radial inneren Oberfläche des Umlenkelementes in der gewünschten Art und Weise ablegen, wenn auf die Verstärkungsfäden ein Zug in Längsrichtung des Umlenkelementes ausgeübt wird. Somit kann in dem Umlenkelement auf langgezogene Führungskanäle, in denen einzelne Verstärkungsfäden geführt werden, vollständig verzichtet werden und die Vorrichtung ist einfach für eine Fertigung vorzubereiten. Ein weiterer Vorteil der Erfindung ist darin zu sehen, daß die einzelnen Verstärkungsfäden in dem Umlenkelement frei zugänglich sind, was u.a. eine einfache Fadenüberwachung ermöglicht.

Gemäß einer Weiterbildung der Erfindung nach Anspruch 2 werden die Verstärkungsfäden in einem Eintrittswinkel von ca. 40° bis 100°, vorzugsweise 80° bis 90°, zur Längsachse des Positionierringes durch den Positionierring geführt. Dementsprechend weist das Umlenkelement an der Eintrittsöffnung ebenfalls einen Eintrittswinkel α von 40° bis 100°, vorzugsweise 80° bis 90°, zur Längsachse des Umlenkelementes auf. Der Vorteil dieser Weiterbildung ist darin zu sehen, daß die einzelnen Verstärkungsfäden radial außerhalb des Positionierringes nahezu senkrecht zur Längsachse des Positionierringes geführt werden können (was einem Eintrittswinkel von 90° entspricht). Ein Spulengatter, auf dem eine Vielzahl von Spulen befestigt ist, von denen die einzelnen Verstärkungsfäden abgewickelt werden, kann somit senkrecht zur Längsachse des Positionierringes ausgerichtet sein, so daß die gesamte Vorrichtung zur Aufbringung der einzelnen Verstärkungsfäden inklusive des Spulengatters nur eine geringe Länge benötigt.

Gemäß einer Weiterbildung der Erfindung nach Anspruch 3 entspricht die radial innere Oberfläche des Umlenkelementes weitgehend der Oberfläche, die bei der Rotation eines Viertelkreises bzw. einer Viertelellipse um die Längsachse des Positionierringes entsteht. Der Vorteil dieser Weiterbildung ist darin zu sehen, daß die einzelnen Verstärkungsfäden auf einer extrem kurzen Länge von einem Eintrittswinkel von 80° bis 90° zur Längsachse des Positionierringes auf einen Austrittswinkel von 0° bis 15° zur Längsachse des Positionierringes umgelenkt werden können.

Gemäß einer Weiterbildung des Verfahrens nach Anspruch 5 wird die erste Schicht auf ihrer radial äußeren Oberfläche vor dem Ablegen der Verstärkungsfäden auf dieser mit einer Haftschicht, z.B. in Form einer Gummilösung, versehen. Gemäß dieser Weiterbildung wird insbesondere dann vorgegangen, wenn die einzelnen Verstärkungsfäden parallel zur Längsrichtung der ersten Schicht auf der radial äußeren Oberfläche dieser Schicht abgelegt werden sollen, da dann keine Umfangskräfte für die Fadeneinbettung zur Verfügung stehen. In diesem Fall werden die einzelnen Verstärkungsfäden durch die Gummilösung auf der radial äußeren Oberfläche der ersten Schicht "verklebt", so daß die einzelnen Verstärkungsfäden sicher in ihrer Position bleiben.

Gemäß einer Weiterbildung des Verfahrens nach Anspruch 6 rotieren Positionierring und Umlenkelement mit der gleichen Winkelgeschwindigkeit um ihre Längsachse, so daß die Verstärkungsfäden spiralförmig auf der radial äußeren Oberfläche der ersten Schicht abgelegt werden. Auch bei dieser Weiterbildung bewegt sich der Dom ausschließlich translatorisch ausgehend von der Eintrittsfläche durch die Austrittsfläche des Umlenkelementes, so daß durch diese Weiterbildung ein Schlauchrohling mit einer spiralförmig verlaufenden Lage aus Verstärkungsfäden gefertigt werden kann. Bei dieser Weiterbildung ist es nicht zwingend notwendig, daß die radial äußere Oberfläche der ersten Schicht vor dem Ablegen der Verstärkungsfäden mit einer Haftschicht versehen wird, da durch das spiralförmige Ablegen der einzelnen Verstärkungsfäden auf jeden Verstärkungsfaden eine nach radial innen gerichtete Kraft wirkt, die jeden einzelnen Verstärkungsfaden automatisch in seiner Position fixiert.

Gemäß einer Weiterbildung der Erfindung nach Anspruch 7 wird die erste Schicht auf ihrer radial äußeren Oberfläche nach dem Ablegen der Verstärkungsfäden auf dieser in einer Verarbeitungsstation von einer Zwischenschicht abgedeckt und auf dieser Zwischenschicht werden weitere Verstärkungsfäden genauso abgelegt, wie es bereits im Zusammenhang mit dem nebengeordneten Anspruch 4 erläutert worden ist. Der Vorteil dieser Weiterbildung ist darin zu sehen, daß ein Schlauchrohling mit zwei Schichten von Verstärkungslagen aus einzelnen äquidistanten Verstärkungsfäden hergestellt werden kann, die durch eine polymere Schicht voneinander getrennt sind.

Gemäß einer Weiterbildung der Erfindung nach Anspruch 8 rotieren Positionierring und Umlenkelement der ersten Vorrichtung und der weiteren Vorrichtung mit einer Winkelgeschwindigkeit um ihre Längsachse, so daß die Verstärkungsfäden spiralförmig auf der radial äußeren Oberfläche der ersten Schicht bzw. der Zwischenschicht abgelegt werden, wobei der Drehsinn des Positionierringes und des Umlenkelementes der weiteren Vorrichtung den Drehsinn des Positionierringes und des Umlenkelementes der ersten Vorrichtung entgegengesetzt ist und die Winkelgeschwindigkeiten, mit denen die beiden Vorrichtungen rotieren, vorzugsweise nahezu übereinstimmen. Die Winkelgeschwindigkeit läßt sich aus der Beziehung n = v/2π D tan δ berechnen. Hierin bedeutet n die Drehzahl der Umlenkvorrichtung, v die Axialgeschwindigkeit des Domes, D der äußere Durchmesser des zu umwickelnden Schlauchrohlings und δ der Fadenwinkel zur Umfangsrichtung des Domes. Der Vorteil dieser Weiterbildung ist darin zu sehen, daß mit Hilfe der ersten und der zweiten Vorrichtung auf einfache Art und Weise ein Schlauchrohling hergestellt werden kann, der zwei spiralförmig gewickelte Verstärkungslagen aus einzelnen äquidistanten Verstärkungsfäden aufweist, die durch eine Zwischenschicht voneinander beabstandet sind.

Gemäß einer Weiterbildung des Verfahrens nach Anspruch 9 entspricht der Radius des Doms weitestgehend dem Radius der Austrittsfläche der ersten Umlenkvorrichtung bzw. der zweiten Umlenkvorrichtung, sofern eine solche vorhanden ist. Unter der Formulierung "weitestgehend dem Radius der Austrittsfläche" ist zu verstehen, daß eine auf den Dom aufgebrachte Schicht In einem minimalen Abstand durch die Austrittsfläche des Umlenkelementes geführt werden kann, ohne die radial innere Oberfläche des Umlenkelementes in der Austrittsfläche zu berühren. Der Vorteil dieser Weiterbildung ist darin zu sehen, daß die einzelnen Verstärkungsfäden zwischen dem Dom und der radial inneren Oberfläche der Austrittsfläche exakt in axialer Richtung geführt werden, so daß ein besonders exaktes Ablegen auf der radial äußeren Oberflläche der Schicht auf dem Dorn möglich ist.

Gemäß einer Weiterbildung des Verfahrens nach Anspruch 10 entspricht die auf jeden Verstärkungsfaden wirkende Zugbelastung 0,5 N bis 5 N, vorzugsweise 0,6 N bis 1 N/Faden. Es hat sich gezeigt, daß eine derartige Zugbelastung bereits ausreichend ist, um zu gewährleisten, daß sich die einzelnen Verstärkungsfäden exakt auf der radial inneren Oberfläche des Umlenkelementes ablegen. Der Vorteil dieser Weiterbildung ist darin zu sehen, daß die gesamte Zugbelastung, die auf sämtliche Verstärkungsfäden wirkt und von dem translatorisch bewegten Dom aufgebracht werden muß, relativ niedrig ist.

Ein Ausführungsbeispiel und weitere Vorteile der Erfindung werden im Zusammenhang mit den nachstehenden Figuren erläutert, darin zeigt:
- Fig. 1a: eine Vorrichtung zur Aufbringung einzelner Verstärkungsfäden auf eine schlauchförmige Schicht im Längsschnitt,
- Fig.1b: eine Vorrichtung zur Aufbringung einzelner Verstärkungsfäden auf eine schlauchförmige Schicht im Querschnitt,
- Fig. 2: ein rotationssymmetrisches trichterförmiges Umlenkelement in schematischer Ansicht,
- Fig. 3: eine Vorrichtung zur Aufbringung einzelner Verstärkungsfäden auf eine schlauchförmige Schicht im Längsschnitt,
- Fig. 4: eine Fertigungsstraße zur Herstellung eines fadenverstärkten, aus mehreren Schichten bestehenden Schlauchrohlings in schematicher Darstellung.

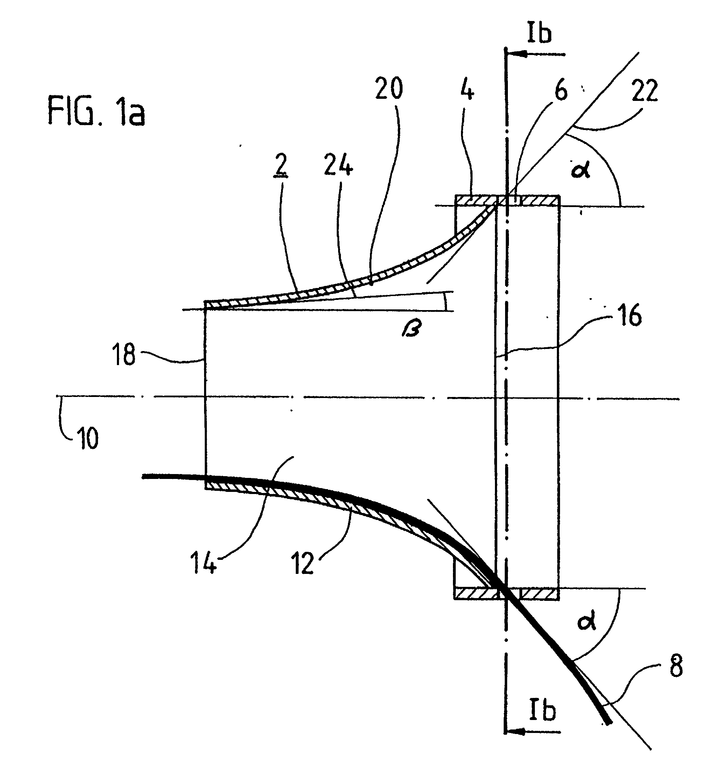

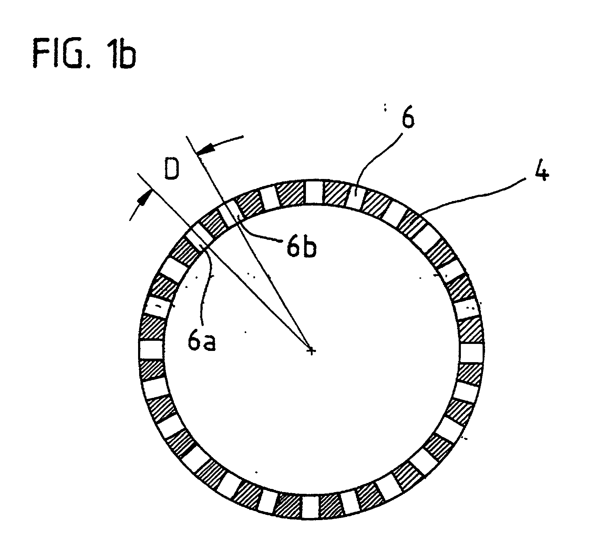

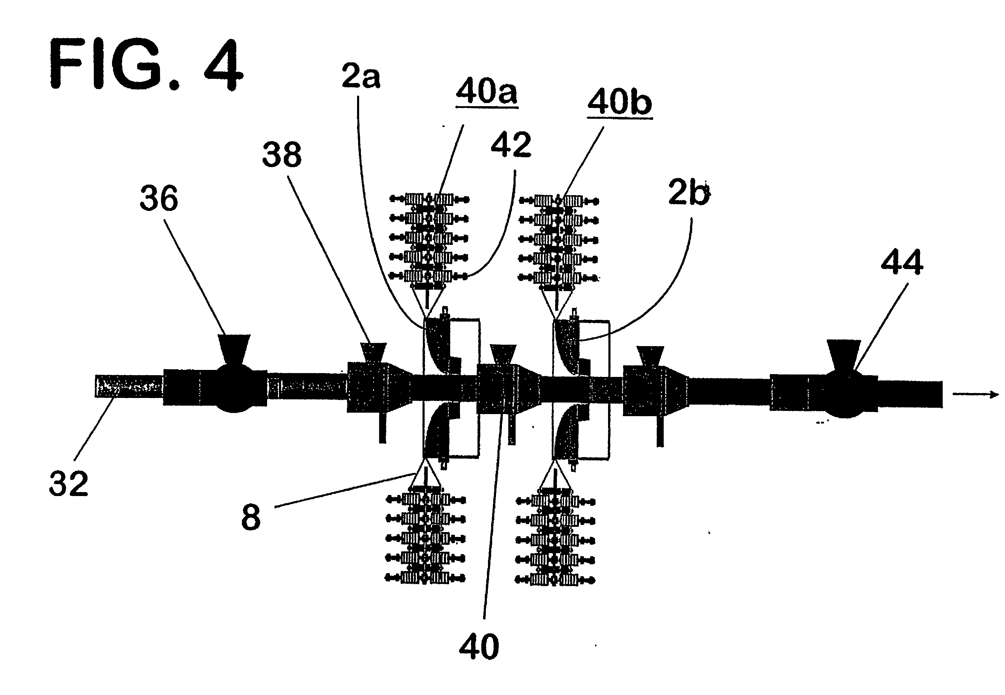

Figur 1a zeigt eine Vorrichtung 2 zur Aufbringung einzelner Verstärkungsfäden auf eine schlauchförmige Schicht im Längsschnitt. Die Vorrichtung 2 enthält einen kreisförmigen Positionierring 4, der auf einer Umfangslinie eine Reihe von äquidistanten Löchern 6 aufweist (siehe auch Figur 1b, die einen Querschnitt entlang der in der Figur 1a eingezeichneten Linie Ib-Ib zeigt). Durch jedes einzelne der Löcher 6 wird ein Verstärkungsfaden 8 in einem Eintrittswinkel α zur Längsachse 10 des Positionierringes 4 von radial außen nach radial innen geführt. Jeder einzelne Verstärkungsfaden 8 wird von einer radial außerhalb des Positionierringes 4 befindlichen Spule abgewickelt, die auf einem Spulengatter befestigt ist, das den Positionierring 4 konzentrisch umschließt (die Spulen und das Spulengatter sind in der Figur 1a nicht eingezeichnet, diesbezüglich sei jedoch auf die Figur 4 verwiesen).

Die Vorrichtung 2 enthält neben dem Positionierring 4 ein rotationssymmmetrisches trichterförmiges Umlenkelement 12. Dieses weist einen einzigen sich stetig verjüngenden Kanal 14 mit einer ringförmigen Eintrittsöffnung 16 und einer kleineren ringförmigen Austrittsöffnung 18 auf. Der Durchmesser der Eintrittsöffnung 16 entspricht dem lichten Durchmesser des Positionierringes. Auf der radial inneren Oberfläche 20 des Umlenkelementes 12 werden die einzelnen Verstärkungsfäden 8 geführt. Dies wird im Zusammenhang mit den nachfolgenden Figuren genauer erläutert.

An der Eintrittsöffnung 16 weist eine in Längsrichtung an die radial innere Oberfläche 20 angelegte Tangente 22 einen Eintrittswinkel α zur Längsachse 10 des Umlenkelementes 12 auf. Der Eintrittswinkel α stimmt mit dem Eintrittswinkel α der Verstärkungsfäden 8 zur Längsachse 10 des Positionierringes 4 überein und liegt zwischen 40° und 100°, vorzugsweise zwischen 80° und 90°.

An der Austrittsöffnung 18 weist eine an die radial innere Oberfläche 20 in Längsrichtung angelegte Tangente 24 einen Austrittswinkel β zur Längsachse 10 des Umlenkelementes 12 auf, der zwischen 0° und 25°, bevorzugt zwischen 0° und 10°, liegt.

Das Umlenkelement 12 wird von dem Positionierring 4 konzentrisch umfaßt, so daß die Längsachse 10 des Umlenkelementes 12 mit der Längsachse 10 des Positionierringes 4 zusammenfällt. Ferner ist das Umlenkelement 12 zum Positionierring 4 derart axial ausgerichtet, daß die Löcher 6 des Positionierringes 4 'unmittelbar vor der Eintrittsöffnung 16 des Umlenkelementes 12 liegen, so daß durch die Löcher 6 von radial außen nach radial innen geführte Verstärkungsfäden 8 direkt in die Eintrittsöffnung 16 des Umlenkelementes 12 geführt werden können. Ein auf der radial inneren Oberfläche geführter Verstärkungsfaden 8, der radial außerhalb des Positionierringes 4 zur Längsachse 10 den Winkel α einnimmt, wird durch das Umlenkelement 12 so umgelenkt, daß an der Austrittsöffnung 18 einen Winkel β zur Längsachse 10 einnimmt.

Figur 1b zeigt einen Schnitt entlang der in der Figur 1a eingezeichneten Linie Ib-Ib. Auf einer Umfangslinie des Positionierringes 4 ist eine Vielzahl von Löchern 6 angeordnet. Zwei nebeneinander liegende Löcher 6a und 6b in dem Positionierring 4 weisen jeweils den gleichen Abstand D voneinander auf. Durch jedes der Löcher 6 wird ein Verstärkungsfaden 8 auf die radial innere Oberfläche 20 des Umlenkelementes 12 geführt, so wie es bereits im Zusammenhang mit der Figur 1a erläutert worden ist.

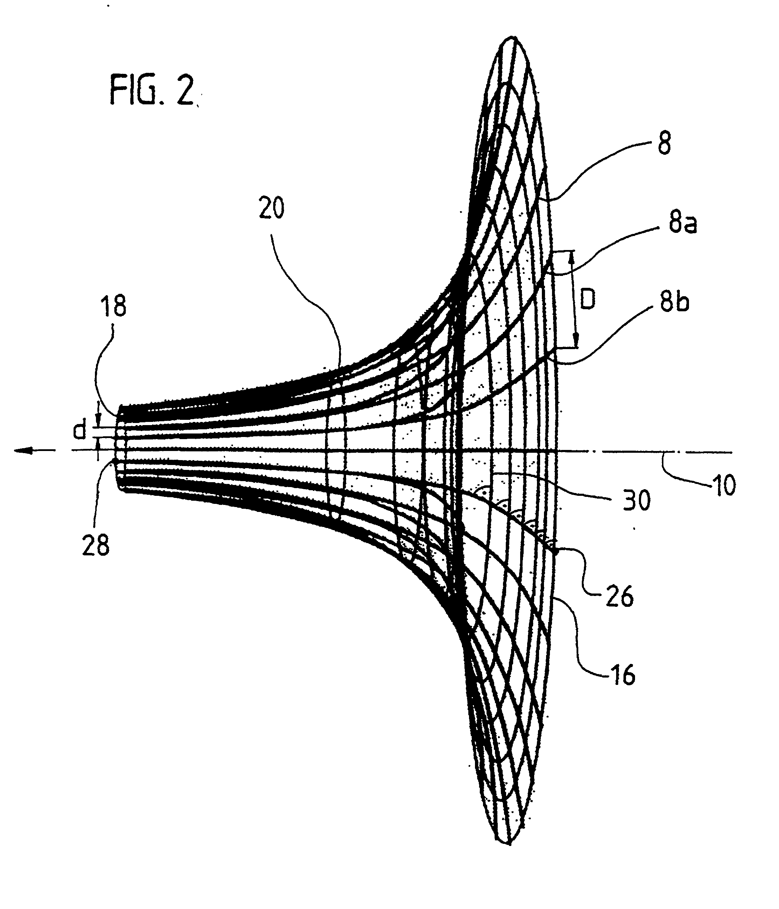

Figur 2 zeigt die radial innere Oberfläche 20 eines Umlenkelementes 12 in perspektivischer Ansicht. Die radial innere Oberfläche 20 ist rotationssymmetrisch zur Längsachse 10 und trichterförmig ausgebildet. Auf der radial inneren Oberfläche 20 verlaufen Verstärkungsfäden 8. In der Eintrittsöffnung 16 haben zwei beliebige benachbarte Verstärkungsfäden 8a und 8b den Abstand D zueinander, der durch den Abstand der Löcher 6 in dem Positionierring 4 vorgegeben ist An der Austrittsöffnung 18 haben zwei beliebige benachbarte Verstärkungsfäden 8a, 8b den Abstand d zueinander. Sämtliche Verstärkungsfäden 8 haben also sowohl in der Eintrittsöffnung 16 als auch in der Austrittsöffnung 18 äquidistante Abstände zueinander. Hierbei ist das Verhältnis D/d genauso wie das Verhältnis R/r, wobei R dem Radius der Eintrittsöffnung 16 und r dem Radius der Austrittsöffnung 16 entspricht. Es gibt also d = Dr/R. Durch das trichterförmige Umlenkelement 12 werden die einzelnen Verstärkungsfäden 8, die In der Eintrittsöffnung 16 große äquidistante Abstände D zueinander aufweisen, also auf kleine äquidistante Abstände zusammengeführt. Das "Maß der Zusammenführung" wird durch das Verhältnis r/R bestimmt

Im folgenden wird erläutert, wie es zu der oben erläuterten Orientierung der Verstärkungsfäden 8 auf der radial inneren Oberfläche 20 kommt. Werden die Verstärkungsfäden 8 ausgehend von der Eintrittsöffnung 16 durch das radial Innere des Umlenkelementes 12 zu der Austrittsöffnung 18 geführt und dabei auf Zug belastet, so legen sich die Verstärkungsfäden 8 auf der radial inneren Oberfläche 20 des Umlenkelementes 12 ab. Wegen der Zugbelastung, die auf jeden einzelnen Verstärkungsfaden 8 in Längsrichtung des Umlenkelementes 12 einwirkt (angedeutet durch den Pfeil in der Figur 2), geschieht dies automatisch so, daß jeder Verstärkungsfaden ausgehend von einem Punkt 26 in der Eintrittsöffnung 16 auf kürzestem Wege zu einem Punkt 28 in der Austrittsöffnung 18 verläuft. Diese kürzeste Verbindungslinie, entlang der ein Verstärkungsfaden 8 verläuft, ist offensichtlich dadurch bestimmt, daß der Verstärkungsfaden 8 auf jeder gedachten kreisrunden Umfangslinie 30 der radial inneren Oberfläche 20 senkrecht steht. Daraus folgt, daß die von der Eintrittsöffnung 16 zur Austrittsöffnung 18 verlaufenden Verstärkungsfäden 8 einander ausschließlich angenähert werden, jedoch in jeder beliebigen gedachten kreisrunden Umfangslinie 30 äquidistante Abstände zueinander einnehmen. Andernfalls gäbe es nämlich mindestens eine gedachte kreisrunde Umfangslinie 30, auf der nicht alle Verstärkungsfäden 8 senkrecht stehen würden. Insbesondere nehmen die Verstärkungsfäden 8 also auch in der Austrittsöffnung 18 äquidistante Abstände zueinander ein.

Die trichterförmige rotationssymmetrisch ausgebildete radial innere Oberfläche 20 des Umlenkelementes 12 bewirkt also, daß die Verstärkungsfäden umgelenkt werden, so wie es im Zusammenhang mit der Figur 1 erläutert worden ist. Darüber hinaus bewirkt die radial innere Oberfläche 20, daß der Abstand D zweier benachtbarter Verstärkungsfäden in der Eintrittsöffnung 16 auf den Abstand d zweier benachbarter Verstärkungsfäden in der Austrittsöffnung 18 verkleinert wird. Dies alles wird erreicht, ohne daß auf der radial inneren Oberfläche 20 ein einzelner Führungskanal für jeden einzelnen Verstärkungsfaden vorgesehen werden muß. Die einzige Bedingung, die erfüllt sein muß, ist die, daß auf die Verstärkungsfäden 8 eine Zugbelastung in Längsrichtung des Umlenkelementes 12 ausgeübt wird. Femer sollten die Reibungskräfte zwischen den Verstärkungsfäden und der radial inneren Oberfläche 20 möglichst klein sein, um eine leichte Ausrichtung der Fäden zu ermöglichen.

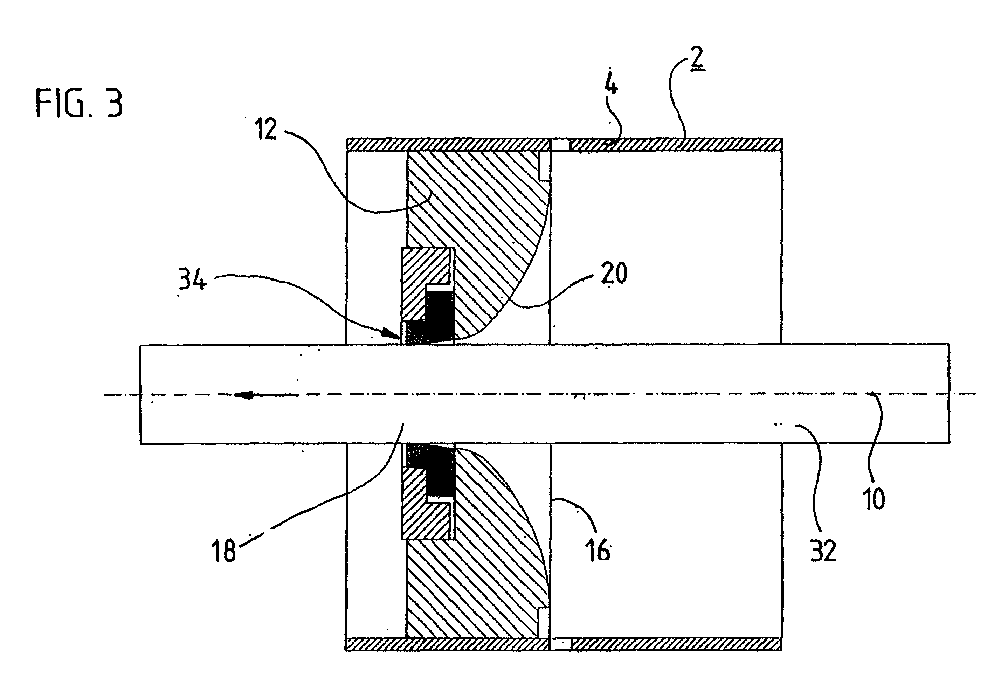

Figur 3 zeigt eine Vorrichtung 2 zur Aufbringung einzelner Verstärkungsfäden auf eine schlauchförmige Schicht im Längsschnitt mit einem kreisförmigen Positionierring 4 und einem rotationssymmetrischen Umlenkelement. Die Vorrichtung ist grundsätzlich genauso aufgebaut, wie es bereits im Zusammenhang mit der Figur 1 erläutert worden ist, so daß auf die diesbezügliche Figurenbeschreibung verwiesen wird. Bei der in der Figur 3 gezeigten Vorrichtung 2 entspricht die radial innere Oberfläche 20 des Umlenkelementes 12 weitestgehend der Oberfläche, die bei der Rotation eines Viertelkreises (bzw. einer Viertelellipse) um die Längsachse 10 des Positionierringes 4 entsteht. Die einzelnen Verstärkungsfäden 8 werden bei dem in der Figur 3 gezeigten Ausführungsbeispiel in einem Eintrittswinkel zur Längsachse 10 des Positionierringes 4 von radial außen nach radial innen geführt, der zwischen 80° und 100°, vorzugsweise zwischen 80° und 90°, liegt. Durch das Umlenkelement 12 werden die einzelnen Verstärkungsfäden so umgelenkt, daß sie an der Austrittsfläche des Umlenkelementes 12 einen Austrittswinkel einnehmen, der zwischen 0° und 10° liegt. Eine Umlenkung über einen derartig großen Winkelbereich kann durch das in der Figur 3 gezeigte Umlenkelement 12 auf einer sehr kurzen Strecke vorgenommen werden.

Durch das radial Innere des Umlenkelementes 12 wird ausgehend von der Eintrittsöffnung 16 konzentrisch ein Dorn 32 geführt (die Bewegungsrichtung des Doms 32 ist durch den Pfeil angedeutet). Der Durchmesser des Domes 32 entspricht weitestgehend dem Durchmesser der Austrittsöffnung 18 des Umlenkelementes 12. Im Bereich der Austrittsöffnung 18 weist das Umlenkelement 12 eine elastische rotationssymmetrische Zentriermanschette 34 auf, deren radial innere Oberfläche bündig in die radial innere Oberfläche 20 des Umlenkelementes 12 übergeht. Die Zentriermanschette 34 ermöglicht es, den Dorn 32 auch dann noch durch das radial Innere des Umlenkelementes 12 zu führen, wenn dieser mit einer dünnen schlauchförmigen Schicht aus polymerem Werkstoff bedeckt ist. In diesem Fall wird die elastische Zentriermanschette um die Dicke der schlauchförmigen Schicht nach radial außen gedrückt und die Verstärkungsfäden werden auf der radial äußeren Oberfläche der schlauchförmigen Schicht abgelegt.

Figur 4 zeigt in schematischer Darstellung eine Fertigungsstraße zur Herstellung eines fadenverstärkten, aus mehreren Schichten bestehenden Schlauchrohlings im Längsschnitt. Der Dorn 32 wird von links nach rechts in Pfeilrichtung durch die einzelnen Verarbeitungsstationen geführt. Mit Hilfe eines ersten Extruders 36 wird auf den Dorn 32 eine erste schlauchförmige Schicht aus polymerem Werkstoff aufgebracht. Auf die radial äußere Oberfläche der ersten schlauchförmigen Schicht kann in einer Verarbeitungsstation 38 eine Haftschicht aufgebracht werden. Danach wird der Dorn 32 durch eine erste Vorrichtung 2a zur Aufbringung einzelner Verstärkungsfäden 8 geführt. Die Vorrichtung 2a ist genauso aufgebaut, wie es bereits im Zusammenhang mit der Figur 3 erläutert wurde. Darüber hinaus wird der Dorn 32 genauso durch die Vorrichtung 2a geführt, wie es ebenfalls bereits im Zusammenhang mit der Figur 3 erläutert wurde. Durch die Vorrichtung 2a werden die von einem Spulengatter 40, das die Vorrichtung 2a konzentrisch umfaßt, bereitgestellten Verstärkungsfäden 8 umgelenkt und auf der radial äußeren Oberfläche der ersten Schicht in äquidistanten Abständen abgelegt.

Damit die auf der radial inneren Oberfläche der Vorrichtung 2 liegenden Verstärkungsfäden durch die translatorische Bewegung des Doms ständig auf Zug in Längsrichtung des Dorns 32 belastet werden, enthält jede Spule 42 des Spulengatters 40 eine Bremse. Durch die Bremse kann die auf jeden einzelnen Verstärkungsfaden wirkende Zugkraft eingestellt werden, bevorzugt wird eine Zugkraft gewählt, die zwischen 5 N und 50 N, vorzugsweise zwischen 0,6 N und 1 N, pro Verstärkungsfaden liegt.

Nachdem auf der radial äußeren Oberfläche der ersten Schicht des Schlauchrohlings in der ersten Vorrichtung 2a die Verstärkungsfäden abgelegt worden sind, wird diese in einer weiteren Verarbeitungsstation 40 von einer Zwischenschicht abgedeckt. Bei der Zwischenschicht kann es sich um eine weitere Schicht aus polymerem Werkstoff oder um eine Haftschicht handeln.

In der Vorrichtung 2b wird dann auf der radial äußeren Oberfläche der Zwischenschicht eine weitere Lage von Verstärkungsfäden abgelegt. Dies erfolgt genauso, wies es bereits im Zusammenhang mit dem Ablegen von Verstärkungsfäden auf der radial äußeren Oberfläche der ersten Schicht erläutert worden ist.

Schließlich wird der Dorn 32 durch einen zweiten Extruder 44 geführt, in der die radial äußere Oberfläche der Zwischenschicht mit einer weiteren Schicht aus polymerem Werkstoff abgedeckt wird. Der Schlauchrohling ist dann fertiggestellt und kann in an sich bekannter Art und Weise weiterverarbeitet werden.

Die erste Vorrichtung 2a und das dazugehörige erste Spulengatter 40a können um die Längsachse des Domes mit einer bestimmten übereinstimmenden Winkelgeschwindigkeit rotieren. In diesem Fall werden die Verstärkungsfäden spiralförmig auf der radial äußeren Oberfläche der ersten Schicht abgelegt. Entsprechend können sich die zweite Vorrichtung 2b und das ihr zugeordnete Spulengatter 40b ebenfalls mit einer bestimmten übereinstimmenden Winkelgeschwindigkeit um die Längsachse des Domes 32 drehen. In diesem Fall werden die Verstärkungsfäden auf der Zwischenschicht ebenfalls spiralförmig abgelegt. Vorzugsweise stimmen die Winkelgeschwindigkeiten der Vorrichtungen 2a und 2b und der Spulengatter 40a und 40b überein und ist der Drehsinn der Vorrichtungen 2a und 2b und der Spulengatter 40a und 40b entgegengesetzt. In diesem Fall ist der Steigungswinkel der beiden Spiralen gleich, lediglich ihr Drehsinn ist entgegengesetzt.

### Bezugszeichenliste

- 2: Vorrichtung zur Aufbringung einzelner Verstärkungsfäden
- 4: Positionierring
- 6: Loch
- 8: Verstärkungsfäden
- 10: Lächsachse des Positionierringes
- 12: Umlenkelement
- 14: Kanal
- 16: ringförmige Eintrittsöffnung
- 18: ringförmige Austrittsöffnung
- 20: radial innere Oberfläche
- 22, 24: Tangente
- 26, 28: Punkt
- 30: kreisrunde Umfangslinie
- 32: Dom
- 34: Zentriermanschette
- 36: erster Extruder
- 38: Verarbeitungsstation
- 40: Spulengatter
- 42: Spule
- 40, 42: Verarbeitungsstation
- 44: zweiter Extruder

## Patentansprüche

1. Vorrichtung (2) zur Aufbringung einzelner Verstärkungsfäden (8) auf eine schlauchförmige Schicht aus polymerem Werkstoff, die zu einem fadenverstärkten, aus mehreren Schichten bestehenden Schlauchrohling aus polymerem Werkstoff weiterverarbeitet wird, wobei
die Vorrichtung (2) folgende Merkmale aufweist:
- die Vorrichtung (2) enthält einen Positionierring (4), der auf einer Umfangslinie mindestens eine Reihe von äquidistanten Löchern (6) aufweist, wobei durch jedes Loch (6) ein Verstärkungsfaden (8) in einem Eintrittswinkel zur Längsachse des Positionierringes (4) von radial außen nach radial innen führbar ist
- die Vorrichtung (2) enthält ein rotationssymmetrisches trichterförmiges Umlenkelement (12), das einen einzigen sich stetig verjüngenden Kanal (14) mit einer ringförmigen Eintrittsöffnung (16) und einer kleineren ringförmigen Austrittsöffnung (18) umschließt und auf dessen radial innerer Oberfläche (20) die Verstärkungsfäden (8) führbar sind
- an der Eintrittsöffnung (16) weist das Umlenkelement einen Eintrittswinkel α zur Längsachse (10) des Umlenkelementes (12) auf, der weitestgehend dem Eintrittswinkel der Verstärkungsfäden (8) zur Längsachse (10) des Positionierringes (4) entspricht
- an der Austrittsöffnung (18) weist das Umlenkelement (12) einen Austrittswinkel β zur Längsachse (10) des Umlenkelementes (12) auf, der zwischen 0° und 25°, vorzugsweise zwischen 0° und 10°, liegt
- das Umlenkelement (12) wird von dem Positionierring (4) konzentrisch umfaßt und ist axial zum Positionierring (4) derart ausgerichtet, daß radial durch die Löcher (6) des Positionierringes (4) geführte Verstärkungsfäden (8) direkt in die Eintrittsöffnung (16) des Umlenkelementes (12) führbar sind.

2. Vorrichtung (2) nach Anspruch 1, **dadurch gekennzeichnet, daß** die Verstärkungsfäden (8) in einem Eintrittswinkel zwischen 40° und 100°, vorzugsweise zwischen 80° und 90°, zur Längsachse (10) des Positionierringes (4) durch die Löcher (6) des Positionierringes (4) geführt werden.

3. Vorrichtung (2) nach Anspruch 2, **dadurch gekennzeichnet, daß** die radial innere Oberfläche (20) des Umlenkelementes (12) weitestgehend der Oberfläche entspricht, die bei der Rotation eines Viertelkreises bzw. einer Viertelellipse um die Längsachse des Positionierringes entsteht.

4. Verfahren zur Herstellung eines fadenverstärkten, aus mehreren Schichten bestehenden Schlauchrohlings aus polymerem Werkstoff, mittels einer Vorrichtung nach einem der Ansprüche 1 bis 3, wobei
- durch jedes Loch (6) des Positionierringes (4) ein Verstärkungsfaden (8) in einem Eintrittswinkel zur Längsachse (10) des Positionierringes (4) von radial außen nach radial innen geführt wird
- die Verstärkungsfäden (8) auf die radial innere Oberfläche (20) des Umlenkelementes (12) gelegt werden und durch das Umlenkelement (12) von dem Eintrittswinkel in einen weitestgehend axialen Verlauf umgelenkt werden, wobei die Verstärkungsfäden (8) ständig auf Zug belastet werden
- und ferner dadurch, daß folgende Verfahrensschritte durchgeführt werden: in einer ersten Verarbeitungsstation (36) wird auf einen rotationssymmetrischen Dom (32) eine erste Schicht aus polymerem Werkstoff aufgebracht
- der mit der ersten Schicht beschichtete Dom (32) wird ausgehend von der Eintrittsöffnung (16) des Umlenkelementes (12) konzentrisch durch die Austrittsöffnung (18) des Umlenkelementes (12) geführt, so daß sich die auf der radial inneren Oberfläche (20) des Umlenkelementes (12) befindlichen Verstärkungsfäden in äquidistanten Abständen auf der radial äußeren Oberfläche der ersten Schicht ablegen
- der mit der ersten Schicht beschichtete Dom (32) wird mindestens einer weiteren Verarbeitungsstation (44) zugeführt, in der auf die erste Schicht eine weitere Schicht aus polymerem Werkstoff aufgebracht wird.

5. Verfahren nach Anspruch 4, **dadurch gekennzeichnet, daß** die erste Schicht auf der radial äußeren Oberfläche vor dem Ablegen der Verstärkungsfäden (8) auf dieser mit einer Haftschicht, z.B. in Form einer Gummilösung, versehen wird.

6. Verfahren nach einem der Ansprüche 4 bis 5, **dadurch gekennzeichnet, daß** der Positionierring (4) und das Umlenkelement (6) mit der gleichen Winkelgeschwindigkeit um ihre Längsachse (10) rotieren, so daß die Verstärkungsfäden (8) spiralförmig auf der radial äußeren Oberfläche der ersten Schicht abgelegt werden.

7. Verfahren nach einem der Ansprüche 4 bis 6, **dadurch gekennzeichnet, daß** die erste Schicht auf ihrer radial äußeren Oberfläche nach dem Ablegen der Verstärkungsfäden (8) auf dieser in einer Verarbeitungsstation (40) von einer Zwischenschicht abgedeckt wird und daß auf dieser Zwischenschicht mittels einer weiteren Umlenkvorrichtung (12) nach einem der Ansprüche 1 bis 3 weitere Verstärkungsfäden (8) wie folgt abgelegt werden:
- durch jedes Loch (6) des Positionierringes (4) der weiteren Vorrichtung (2) wird ein Verstärkungsfaden in einem Eintrittswinkel zur Längsachse des Positionierringes (4) von radial außen nach radial innen geführt
- die Verstärkungsfäden (8) werden auf der radial inneren Oberfläche (20) des Umlenkelementes (12) der weiteren Vorrichtung (2) gelegt und werden durch das Umlenkelement (12) von dem Eintrittswinkel in einen weitestgehend axialen Verlauf umgelenkt, wobei die Verstärkungsfäden (8) ständig auf Zug belastet werden
- der mit der ersten Schicht und mit der Zwischenschicht beschichtete Dom (32) wird ausgehend von der Eintrittsöffnung (16) des Umlenkelementes (12) konzentrisch durch die Austrittsfläche (18) des Umlenkelementes (12) geführt, so daß sich die auf der radial inneren Oberfläche (20) des Umlenkelementes (12) befindlichen Verstärkungsfäden (8) in äquidistanten Abständen auf der radial äußeren Oberfläche der Zwischenschicht ablegen.

8. Verfahren nach Anspruch 7, **dadurch gekennzeichnet, daß** der Positionierring (4) und das Umlenkelement (12) der ersten Vorrichtung (2a) und der zweiten Vorrichtung (2b) mit einer Winkelgeschwindigkeit um ihre Längsachse (10) rotieren, so daß die Verstärkungsfäden (8) spiralförmig auf der radial äußeren Oberfläche der ersten Schicht bzw. der Zwischenschicht abgelegt werden, wobei der Drehsinn des Positonierringes (4) und des Umlenkelementes (12) der zweiten Vorrichtung (2b) den Drehsinn des Positonierringes (4) und des Umlenkelementes (12) der ersten Vorrichtung (2a) entgegengesetzt ist und die Winkelgeschwindigkeiten, mit denen die beiden Vorrichtungen (2a, 2b) rotieren, vorzugsweise übereinstimmen.

9. Verfahren nach einem der Ansprüche 4 bis 8, **dadurch gekennzeichnet, daß** der Radius des Dorns (32) weitestgehend dem Radius der Austrittsöffnung (18) der ersten Umlenkvorrichtung (12) bzw. der zweiten Umlenkvorrichtung (12) entspricht, sofern eine solche vorhanden ist.

10. Verfahren nach einem der Ansprüche 4 bis 8, **dadurch gekennzeichnet, daß** die auf jeden Verstärkungsfaden (8) wirkende Zugbelastung zwischen 0,5 Nm und 5 Nm liegt.

## Claims

1. Apparatus (2) for applying individual reinforcing filaments (8) to a hose-like layer of polymeric material, which layer is subsequently treated to form a filament-reinforced hose blank comprising a plurality of layers and formed from polymeric material, wherein the apparatus (2) has the following features:
- the apparatus (2) includes a positioning ring (4), which has at least one row of equidistant holes (6) on a circumferential line, a reinforcing filament (8) being guidable through each hole (6) from radially externally to radially internally at an angle of entry relative to the longitudinal axis of the positioning ring (4),
- the apparatus (2) includes a rotationally symmetrical, funnel-shaped deflecting element (12), which surrounds a single, constantly tapering channel (14) having an annular inlet aperture (16) and a smaller annular outlet aperture (18), and the reinforcing filaments (8) are guidable on the radially inner surface (20) of said element,
- the deflecting element at the inlet aperture (16) has an angle of entry α relative to the longitudinal axis (10) of the deflecting element (12), which angle largely corresponds to the angle of entry of the reinforcing filaments (8) relative to the longitudinal axis (10) of the positioning ring (4),
- the deflecting element (12) at the outlet aperture (18) has an angle of emergence β relative to the longitudinal axis (10) of the deflecting element (12), which angle is between 0° and 25°, preferably between 0° and 10°,
- the deflecting element (12) is concentrically surrounded by the positioning ring (4) and orientated axially relative to the positioning ring (4) in such a manner that reinforcing filaments (8), which are guided radially through the holes (6) of the positioning ring (4), are guidable directly into the inlet aperture (16) of the deflecting element (12).

2. Apparatus (2) according to claim 1, **characterised in that** the reinforcing filaments (8) are guided through the holes (6) of the positioning ring (4) at an angle of entry between 40° and 100°, preferably between 80° and 90°, relative to the longitudinal axis (10) of the positioning ring (4).

3. Apparatus (2) according to claim 2, **characterised in that** the radially inner surface (20) of the deflecting element (12) largely corresponds to the surface which is produced during the rotation of a quarter-circle or respectively of a quarter-ellipse about the longitudinal axis of the positioning ring.

4. Method of producing a filament-reinforced hose blank, comprising a plurality of layers, from polymeric material, by means of an apparatus according to one of claims 1 to 3, wherein
- a reinforcing filament (8) is guided through each hole (6) of the positioning ring (4) from radially externally to radially internally at an angle of entry relative to the longitudinal axis (10) of the positioning ring (4), and
- the reinforcing filaments (8) are placed upon the radially inner surface (20) of the deflecting element (12) and deflected by the deflecting element (12) from the angle of entry to a largely axial direction, the reinforcing filaments (8) being constantly loaded in a tensile manner, and also wherein the following method steps are accomplished:
- a first layer of polymeric material is applied to a rotationally symmetrical mandrel (32) in a first processing station (36),
- the mandrel (32), which is coated with the first layer, is guided from the inlet aperture (16) of the deflecting element (12) concentrically through the outlet aperture (18) of the deflecting element (12), so that the reinforcing filaments, situated on the radially inner surface (20) of the deflecting element (12), are deposited on the radially outer surface of the first layer at equidistant intervals, and
- the mandrel (32), which is coated with the first layer, is supplied to at least one additional processing station (44), in which an additional layer of polymeric material is applied to the first layer.

5. Method according to claim 4, **characterised in that**, prior to the reinforcing filaments (8) being deposited on the radially outer surface, the first layer is provided on said surface with an adhesive layer, e.g. in the form of a rubber solution.

6. Method according to one of claims 4 to 5, **characterised in that** the positioning ring (4) and the deflecting element (12) rotate about their longitudinal axis (10) at the same angular speed, so that the reinforcing filaments (8) are deposited helically on the radially outer surface of the first layer.

7. Method according to one of claims 4 to 6, **characterised in that** the first layer is covered in a processing station (40) by an intermediate layer on its radially outer surface after the reinforcing filaments (8) have been deposited on said surface, and **in that** additional reinforcing filaments (8) are deposited as follows on this intermediate layer by means of an additional deflecting apparatus (2) according to one of claims 1 to 3:
- a reinforcing filament is guided through each hole (6) of the positioning ring (4) of the additional apparatus (2) from radially externally to radially internally at an angle of entry relative to the longitudinal axis of the positioning ring (4),
- the reinforcing filaments (8) are placed on the radially inner surface (20) of the deflecting element (12) of the additional apparatus (2) and deflected by the deflecting element (12) from the angle of entry into a largely axial direction, the reinforcing filaments (8) being constantly loaded in a tensile manner, and
- the mandrel (32), which is coated with the first layer and with the intermediate layer, is guided from the inlet aperture (16) of the deflecting element (12) concentrically through the outlet aperture (18) of the deflecting element (12), so that the reinforcing filaments (8), situated on the radially inner surface (20) of the deflecting element (12), are deposited on the radially outer surface of the intermediate layer at equidistant intervals.

8. Method according to claim 7, **characterised in that** the positioning ring (4) and the deflecting element (12) of the first apparatus (2a) and of the second apparatus (2b) rotate about their longitudinal axis (10) at an angular speed, so that the reinforcing filaments (8) are deposited helically on the radially outer surface of the first layer, or respectively of the intermediate layer, the direction of rotation of the positioning ring (4) and of the deflecting element (12) of the second apparatus (2b) being opposed to the direction of rotation of the positioning ring (4) and of the deflecting element (12) of the first apparatus (2a), and the angular speeds, at which the two apparatuses (2a, 2b) rotate, being preferably identical.

9. Method according to one of claims 4 to 8, **characterised in that** the radius of the mandrel (32) largely corresponds to the radius of the outlet aperture (18) of the first deflecting element (12), or respectively of the second deflecting element (12), if there is one such second apparatus.

10. Method according to one of claims 4 to 8, **characterised in that** the tensile loading, acting on each reinforcing filament (8), is between 0.5 Nm and 5 Nm.

## Revendications

1. Dispositif (2) pour appliquer des fils de renfort (8) individuels sur une couche d'un matériau polymère, qui se présente sous la forme d'un boyau ou d'un tuyau ensuite transformé en un boyau ou tuyau brut en matériau polymère, renforcé de fils et formé de plusieurs couches, le dispositif (2) présentant les caractéristiques suivantes :
- le dispositif (2) comprend un anneau de positionnement (4), qui sur une ligne périphérique présente au moins une rangée de trous (6) équidistants, un fil de renfort (8) pouvant être mené à travers chaque trou (6), de radialement à l'extérieur vers radialement à l'intérieur, en formant un angle d'entrée par rapport à l'axe longitudinal de l'anneau de positionnement (4),
- le dispositif (2) comprend un élément déviateur (12) en forme d'entonnoir à symétrie de rotation, enfermant un unique canal (14) qui se rétrécit continuellement, présente une ouverture d'entrée (16) de forme annulaire et une ouverture de sortie (18) de forme annulaire plus petite, et sur la surface radialement intérieure (20) duquel peuvent être guidés les fils de renfort (8),
- au niveau de l'ouverture d'entrée (16), l'élément déviateur présente un angle d'entrée α par rapport à l'axe longitudinal (10) de l'élément déviateur (12), qui correspond dans une large mesure à l'angle d'entrée que forment les fils de renfort (8) par rapport à l'axe longitudinal (10) de l'anneau de positionnement (4),
- au niveau de l'ouverture de sortie (18), l'élément déviateur (12) présente un angle de sortie β par rapport à l'axe longitudinal (10) de l'élément déviateur (12), qui se situe entre 0° et 25°, de préférence entre 0° et 10°,
- l'élément déviateur (12) est enserré concentriquement par l'anneau de positionnement (4) et est orienté axialement par rapport à l'anneau de positionnement (4) de façon telle que des fils de renfort (8) guidés radialement à travers les trous (6) de l'anneau de positionnement (4) puissent être menés directement dans l'ouverture d'entrée (16) de l'élément déviateur (12).

2. Dispositif (2) selon la revendication 1; **caractérisé en ce que** les fils de renfort (8) sont guidés à travers les trous (6) de l'anneau de positionnement (4), en formant un angle d'entrée compris entre 40° et 100°, de préférence entre 80° et 90°, par rapport à l'axe longitudinal (10) de l'anneau de positionnement (4).

3. Dispositif (2) selon la revendication 2, **caractérisé en ce que** la surface radialement intérieure (20) de l'élément déviateur (12) correspond dans une large mesure à la surface obtenue par la rotation d'un quart de cercle ou d'un quart d'ellipse autour de l'axe longitudinal de l'anneau de positionnement.

4. Procédé de fabrication d'un tuyau ou boyau brut en matériau polymère, renforcé de fils et formé de plusieurs couches, au moyen d'un dispositif selon l'une des revendications 1 à 3, d'après lequel
- à travers chaque trou (6) de l'anneau de positionnement (4), un fil de renfort (8) est mené de radialement à l'extérieur vers radialement à l'intérieur, sous un angle d'entrée par rapport à l'axe longitudinal (10) de l'anneau de positionnement (4),
- les fils de renfort (8) sont déposés sur la surface radialement intérieure (20) de l'élément déviateur (12), et sont déviés par l'élément déviateur (12), de l'angle d'entrée vers un tracé dans une large mesure axial, les fils de renfort (8) étant constamment sollicités en traction,
les étapes de procédé suivantes étant en outre effectuées :
- dans un premier poste de transformation (36), une première couche de matériau polymère est appliquée sur un mandrin (32) à symétrie de rotation,
- le mandrin (32) revêtu de la première couche est, à partir de l'ouverture d'entrée (16) de l'élément déviateur (12), mené et guidé de manière concentrique à travers l'ouverture de sortie (18) de l'élément déviateur (12), de sorte que les fils de renfort se trouvant sur la surface radialement intérieure (20) de l'élément déviateur (12), se déposent selon des espacements équidistants, sur la surface radialement extérieure de ladite première couche,
- le mandrin (32) revêtu de la première couche est amené à au moins un autre poste de transformation (44) dans lequel une autre couche de matériau polymère est appliquée sur la première couche.

5. Procédé selon la revendication 4, **caractérisé en ce que** l'on munit la première couche, sur la surface radialement extérieure, avant le dépôt sur celle-ci des fils de renfort (8), d'une couche adhésive ou d'accrochage, par exemple sous la forme d'une dissolution de caoutchouc.

6. Procédé selon l'une des revendications 4 à 5, **caractérisé en ce que** l'anneau de positionnement (4) et l'élément déviateur (12) tournent avec la même vitesse angulaire autour de leur axe longitudinal (10), de sorte que les fils de renfort (8) sont déposés en hélice sur la surface radialement extérieure de la première couche.

7. Procédé selon l'une des revendications 4 à 6, **caractérisé en ce que** la première couche, sur sa surface radialement extérieure, après le dépôt des fils de renfort (8) sur celle-ci, est recouverte par une couche intermédiaire dans un poste de transformation (40), et **en ce que** sont déposés sur cette couche intermédiaire, à l'aide d'un autre dispositif déviateur (12) selon l'une des revendications 1 à 3, d'autres fils de renfort (8), de la manière suivante :
- à travers chaque trou (6) de l'anneau de positionnement (4) de l'autre dispositif (2), un fil de renfort (8) est mené de radialement à l'extérieur vers radialement à l'intérieur, sous un angle d'entrée par rapport à l'axe longitudinal (10) de l'anneau de positionnement (4),
- les fils de renfort (8) sont déposés sur la surface radialement intérieure (20) de l'élément déviateur (12) dudit autre dispositif (2), et sont déviés par l'élément déviateur (12), de l'angle d'entrée vers un tracé dans une large mesure axial, les fils de renfort (8) étant constamment sollicités en traction,
- le mandrin (32) revêtu de la première couche et de la couche intermédiaire est, à partir de l'ouverture d'entrée (16) de l'élément déviateur (12), mené et guidé de manière concentrique à travers l'ouverture de sortie (18) de l'élément déviateur (12), de sorte que les fils de renfort (8) se trouvant sur la surface radialement intérieure (20) de l'élément déviateur (12), se déposent selon des espacements équidistants, sur la surface radialement extérieure de la couche intermédiaire.

8. Procédé selon la revendication 7, **caractérisé en ce que** l'anneau de positionnement (4) et l'élément déviateur (12) du premier dispositif (2a) et du second dispositif (2b) tournent avec une vitesse angulaire autour de leur axe longitudinal (10), de sorte que les fils de renfort (8) sont déposés en forme de spirale sur la surface radialement extérieure de la première couche et respectivement de la couche intermédiaire, le sens de rotation de l'anneau de positionnement (4) et de l'élément déviateur (12) du second dispositif (2b) étant opposé au sens de rotation de l'anneau de positionnement (4) et de l'élément déviateur (12) du premier dispositif (2a), et les vitesses angulaires, avec lesquelles tournent les deux dispositifs (2a, 2b) étant de préférence concordantes.

9. Procédé selon l'une des revendications 4 à 8, **caractérisé en ce que** le rayon du mandrin (32) correspond dans une large mesure au rayon de l'ouverture de sortie (18) du premier dispositif déviateur (12) et respectivement du second dispositif déviateur (12) dans la mesure où celui-ci existe.

10. Procédé selon l'une des revendications 4 à 8, **caractérisé en ce que** la sollicitation de traction agissant sur chaque fil de renfort (8) se situe entre 0,5 Nm et 5 Nm.
